# EUROPÄISCHE PATENTANMELDUNG

(11) **EP 3 421 787 A1**
(43) Veröffentlichungstag der Anmeldung: **02.01.2019**
(21) Anmeldenummer: 18179822.4
(22) Anmeldetag: 26.06.2018
(51) Int. Cl.: F03D 80/30, F03D 1/06

(54) **BLITZSCHUTZSYSTEM FÜR EIN ROTORBLATT**

(30) Priorität: 26.06.2017 DE 102017114151
(71) Anmelder: eno energy systems GmbH, 18055 Rostock (DE)
(72) Erfinder: Porm, Karsten, 18236 Kröpelin (DE); Bockholt, Stefan, 18255 Kühlungsborn (DE); Jaeger, Steffen, 18435 Stralsund (DE)
(74) Vertreter: 2SPL Patentanwälte PartG mbB

(57) **Zusammenfassung**

Ausführungsbeispiele der vorliegenden Erfindung befassen sich mit einem Blitzschutzsystem für eine Windenergieanlage als Ableitvorrichtung für einen elektrischen Strom aus einem Rotorblatt (210). In Folge eines Blitzeinschlages leitet ein entlang des Rotorblattes (210) verlaufende Kupfergewebe (220) den elektrischen Strom aus einem Endkantenrezeptor an eine Entladevorrichtung. Der mittels der Entladevorrichtung an die Rotornabe (240) geleitete Strom wird durch eine Erdungseinrichtung (260) abgeleitet.

## Beschreibung

### Technisches Gebiet

Ausführungsbeispiele der vorliegenden Erfindung befassen sich mit einem Blitzschutzsystem als Ableitvorrichtung für einen elektrischen Strom aus einem Rotorblatt in einer Windenergieanlage.

### Hintergrund

Der Betrieb von Windkraftanlagen oder Windenergieanlagen (WEA) ermöglicht eine Energiegewinnung aus erneuerbaren Energiequellen. In Abhängigkeit von den Anforderungen an die Energiegewinnung und von den vorhandenen klimatischen Bedingungen werden WEA On- und Offshore betrieben. Aufgrund der exponierten Bauart sind WEA besonders von Blitzeinschlägen betroffen. Direkte Blitzeinschläge in WEA haben einen hohen Energieeintrag in das Objekt, welches Folgen auf den sicheren Betrieb und die Energiegewinnung einer WEA haben kann. Um die Folgen von direkten Blitzeinschlägen zu minimieren, werden in WEA Blitzschutzsysteme verbaut. In Blitzschutzsystemen wird die durch den Blitzeinschlag eingeführte Energie mittels eines elektrischen Leiters an ein Potentialausgleich abgeleitet. Der elektrische Leiter überbrückt somit das vom Blitz getroffene Objekt. Die Anforderungen an die Ableiteinrichtung zum Potentialausgleich in einer WEA ist in der Blitzschutznorm für Windenergieanlagen DIN EN 61400-24:2011 geregelt. Die Anforderungen umfassen den Blitzschutz von Teilkomponenten wie zum Beispiel den Rotorblättern, dem mechanischen Antriebsstrang und den elektrischen und elektronischen Steuerungssystemen. Gegenwärtig verwendete Blitzschutzsysteme in WEA leiten den Strom über ein Kabel in den Rotorblättern ab. Direkte Blitzeinschläge in WEA können jedoch zu einer erhöhten Beanspruchung in Form von lokalen Ausschmelzungen und Oberflächenfehlern an der Anlage führen. Um einer Ausbreitung der Schäden vorzubeugen, oder eine betroffene WEA wieder in den Ursprungszustand zu versetzen, ist dann eine Instandsetzung nötig. Bauartbedingt verursachen direkte Blitzeinschläge im Bereich der Rotorblätter hohe Instandsetzungs-, Wartungs- und Ausfallkosten.

Aus der Druckschrift US 6,612,810 B1 ist ein Blitzschutzsystem bekannt, welches den Energieeintrag eines Blitzes in eine WEA über die Querbolzen des Rotorblattes durch das Lager zur Rotornabe ableitet. Das Lager in der WEA wird hierbei durch eine dafür nicht vorgesehene elektrische Last beansprucht. Ferner ist aus der Druckschrift US 7,390,169 B2 ein von außen angebrachtes Blitzschutzsystem bekannt, welches der direkten Witterung ausgesetzt ist und die Strömungen um den Rotor beeinflussen kann.

Daher bedarf es nach dem gegenwärtigen Stand der Technik ein lebensdauerfest ausgelegtes kompaktes Blitzschutzsystem für moderne WEA.

### Zusammenfassung

Bei Ausführungsbeispielen der vorliegenden Erfindung handelt es sich um ein System zum Ableiten eines elektrischen Stroms in einem Rotorblatt einer WEA umfassend eine Entladevorrichtung, die an einer Innenseite einer Wurzel des Rotorblattes angebracht ist. Ferner ist die Entladevorrichtung ausgebildet, einen Strom an einen mit einer Rotornabe verbundenen Abnehmer zu übertragen.

In Folge eines Blitzeinschlages in ein Rotorblatt einer WEA wird durch die elektrische Leitfähigkeit der verwendenden Komponenten in der Entladevorrichtung ein hoher Blitzschutz im Rotorblatt gewährleistet, welcher durch die verdeckte Ausführung der Entladevorrichtung an der Innenseite des Rotorblattes von Wettereinflüssen unabhängig, und zuverlässiger, Betrieben werden kann.

Ferner umfassen Ausführungsbeispiele der vorliegenden Erfindung ein System zum Ableiten eines elektrischen Stroms in einem Rotorblatt einer WEA an eine Entladevorrichtung mittels einer kammförmigen Kontaktplatte, die über Anschlüsse mit einer Entladevorrichtung zum Ableiten eines elektrischen Stroms verbunden ist.

Durch die kammförmige Geometrie der Kontaktplatte wird die Krümmung des Rotorblattes aufgenommen, wodurch sowohl eine große Kontaktfläche zur Aufnahme eines elektrischen Stroms zwischen der Kontaktplatte und dem Rotorblatt entsteht, als auch eine kleine Strömungseinwirkung durch die Kontaktplatte auf das Rotorblatt entsteht.

Weitere Ausführungsbeispiele der vorliegenden Erfindung umfassen ein System zum Ableiten eines elektrischen Stroms aus einer Rotorblattspitze in einer WEA umfassend eine Rotorblattspitze aus einem elektrisch leitenden Material, eine Kontaktplatte zur Anbindung einer sich entlang des Rotorblattes erstreckenden elektrisch leitenden Struktur, und eine Adapterrippe aus elektrisch leitendem Material, die zwischen der Rotorblattspitze und der Kontaktplatte angeordnet und mit beiden elektrisch leitend verbunden ist.

Aufgrund der hervorstehenden Geometrie eines Rotorblattes in einer WEA, ist die Rotorblattspitze besonders von direkten Blitzeinschlägen betroffen. Durch die elektrische Leitfähigkeit der Rotorblattspitze, der Adapterrippe und der Kontaktplatte, kann der Blitzstrom abgeleitet werden. Ferner, kann durch den Kontakt zu einer sich entlang des Rotorblattes erstreckenden elektrisch leitenden Struktur ein Blitzstrom am Rotorblatt überbrückt und abgeleitet werden.

Des Weitern umfassen Ausführungsbeispiele der vorliegenden Erfindung ein Verfahren zum Verbinden einer Kontaktplatte mit einem Kupfergewebe zum Ableiten eines elektrischen Stroms in einem Rotorblatt. Die elektrische Leitfähigkeit wird unter Verwendung einer kaltverschweißten Verbindung der Kontaktplatten und dem Kupfergewebe ermöglicht.

Die sich entlang des Rotorblattes erstreckenden elektrisch leitende Struktur in Form eines Kupfergewebes wird mittels eines kaltschweißverfahren mit einer Kontaktplatte, oder zwischen zwei Kontaktplatten verbunden. Die Verbindungsart ermöglicht zwischen den Bauteilen und Materialien einen dauerfesten elektrischen Kontakt.

### Figurenkurzbeschreibung

Ausführungsbeispiele werden nachfolgend bezugnehmend auf die beiliegenden Figuren näher erläutert. Es zeigen:
- Fig. 1: eine schematische Darstellung eines Blitzschutzsystems in einer Rotorblattwurzel;
- Fig. 2: eine schematische Darstellung eines Blitzschutzsystems für eine WEA;
- Fig. 3: eine schematische Darstellung einer Entladevorrichtung eines Blitzschutzsystems;
- Fig. 4: eine schematische Darstellung einer Kontaktplatte zur Kontaktierung unterschiedlicher Komponenten des Blitzschutzsystems;
- Fig. 5: eine schematische Darstellung eines Ausschnitts eines Rotorblattes und eines Kupfergewebes;
- Fig. 6: ein Fließdiagramm eines Verfahren zum Verbinden einer Kontaktplatte;
- Fig. 7: eine schematische Darstellung eines Endkantenrezeptors eines Blitzschutzsystems; und
- Fig. 8: eine schematische Darstellung einer Adapterplatte eines Blitzschutzsystems.

### Beschreibung

Bei der nachfolgenden Beschreibung der beigefügten Figuren, die lediglich einige exemplarische Ausführungsbeispiele zeigen, können gleiche Bezugszeichen gleiche oder vergleichbare Komponenten bezeichnen. Ferner können zusammenfassende Bezugszeichen für Komponenten und Objekte verwendet werden, die mehrfach in einem Ausführungsbeispiel oder in einer Zeichnung auftreten, jedoch hinsichtlich eines oder mehrerer Merkmale gemeinsam beschrieben werden. Komponenten oder Objekte, die mit gleichen oder zusammenfassenden Bezugszeichen beschrieben werden, können hinsichtlich einzelner, mehrerer oder aller Merkmale, beispielsweise ihrer Dimensionierungen, gleich, jedoch gegebenenfalls auch unterschiedlich ausgeführt sein, sofern sich aus der Beschreibung nicht etwas Anderes explizit oder implizit ergibt.

Obwohl Ausführungsbeispiele auf verschiedene Weise modifiziert und abgeändert werden können, sind Ausführungsbeispiele in den Figuren als Beispiele dargestellt und werden hierin ausführlich beschrieben. Es sei jedoch klargestellt, dass nicht beabsichtigt ist, Ausführungsbeispiele auf die jeweils offenbarten Formen zu beschränken, sondern dass Ausführungsbeispiele vielmehr sämtliche funktionale und/oder strukturelle Modifikationen, Äquivalente und Alternativen, die im Bereich der Erfindung liegen, abdecken sollen. Gleiche Bezugszeichen bezeichnen in der gesamten Figurenbeschreibung gleiche oder ähnliche Elemente.

Man beachte, dass ein Element, das als mit einem anderen Element "verbunden" oder "verkoppelt" bezeichnet wird, mit dem anderen Element direkt verbunden oder verkoppelt sein kann oder dass dazwischenliegende Elemente vorhanden sein können.

Die Terminologie, die hierin verwendet wird, dient nur der Beschreibung bestimmter Ausführungsbeispiele und soll die Ausführungsbeispiele nicht beschränken. Wie hierin verwendet, sollen die Singularformen "einer," "eine", "eines" und "der, die, das" auch die Pluralformen beinhalten, solange der Kontext nicht eindeutig etwas anderes angibt. Ferner sei klargestellt, dass die Ausdrücke wie z.B. "beinhaltet", "beinhaltend", aufweist" und/oder "aufweisend", wie hierin verwendet, das Vorhandensein von genannten Merkmalen, ganzen Zahlen, Schritten, Arbeitsabläufen, Elementen und/oder Komponenten angeben, aber das Vorhandensein oder die Hinzufügung von einem bzw. einer oder mehreren Merkmalen, ganzen Zahlen, Schritten, Arbeitsabläufen, Elementen, Komponenten und/oder Gruppen davon nicht ausschließen.

Solange nichts Anderes definiert ist, haben sämtliche hierin verwendeten Begriffe (einschließlich von technischen und wissenschaftlichen Begriffen) die gleiche Bedeutung, die ihnen ein Durchschnittsfachmann auf dem Gebiet, zu dem die Ausführungsbeispiele gehören, beimisst. Ferner sei klargestellt, dass Ausdrücke, z.B. diejenigen, die in allgemein verwendeten Wörterbüchern definiert sind, so zu interpretieren sind, als hätten sie die Bedeutung, die mit ihrer Bedeutung im Kontext der einschlägigen Technik konsistent ist, solange dies hierin nicht ausdrücklich anders definiert ist.

Die in der vorstehenden Beschreibung, den nachfolgenden Ansprüchen und den beigefügten Figuren offenbarten Merkmale können sowohl einzeln wie auch in beliebiger Kombination für die Verwirklichung eines Ausführungsbeispiels in ihren verschiedenen Ausgestaltungen von Bedeutung sein und implementiert werden.

Obwohl manche Aspekte im Zusammenhang mit einer Vorrichtung beschrieben wurden, versteht es sich, dass diese Aspekte auch eine Beschreibung des entsprechenden Verfahrens darstellen, sodass ein Block oder ein Bauelement einer Vorrichtung auch als ein entsprechender Verfahrensschritt oder als ein Merkmal eines Verfahrensschrittes zu verstehen ist. Analog dazu stellen Aspekte, die im Zusammenhang mit einem oder als ein Verfahrensschritt beschrieben wurden, auch eine Beschreibung eines entsprechenden Blocks oder Details oder Merkmals einer entsprechenden Vorrichtung dar.

Die oben beschriebenen Ausführungsbeispiele stellen lediglich eine Veranschaulichung der Prinzipien der vorliegenden Erfindung dar. Es versteht sich, dass Modifikationen und Variationen der hierin beschriebenen Anordnungen und Einzelheiten anderen Fachleuten einleuchten werden. Deshalb ist beabsichtigt, dass die Erfindung lediglich durch den Schutzumfang der nachstehenden Patentansprüche und nicht durch die spezifischen Einzelheiten, die anhand der Beschreibung und der Erläuterung der Ausführungsbeispiele hierin präsentiert wurden, beschränkt sei.

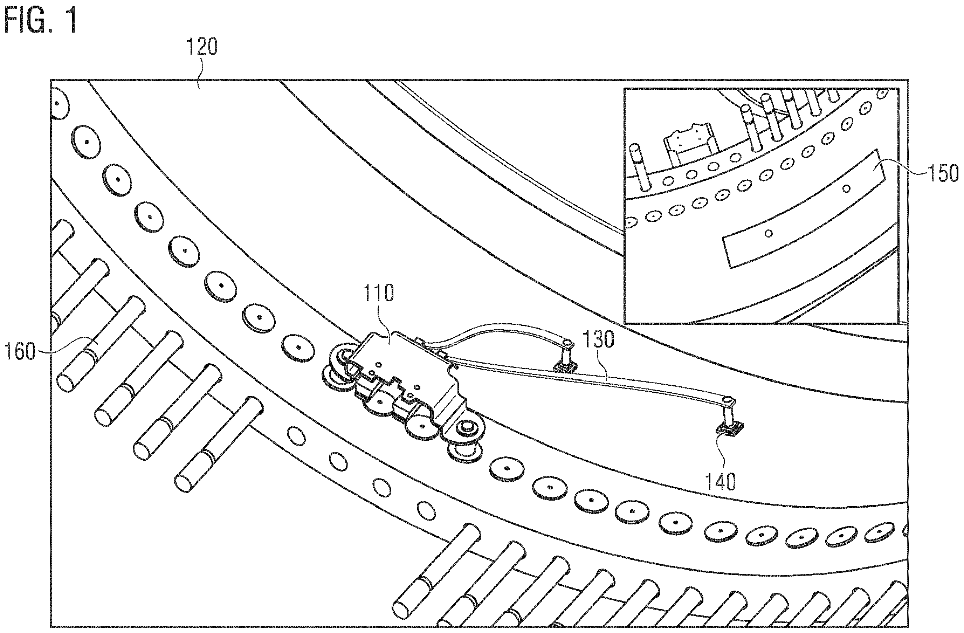

Die Fig. 1 zeigt eine schematische Darstellung eines Blitzschutzsystems für eine WEA bestehend aus einer Entladevorrichtung 110 angebracht an der Innenseite einer Rotorblattwurzel 120, einem Masseband 130, einem Bolzen 140, einer Kontaktplatte 150 angebracht an der Außenseite einer Rotorblattwurzel 120 und einem Rotorblattbolzen 160 zum Verbinden einer Rotorblattwurzel 120 mit einer Rotornabe. Im Ausführungsbeispiel ist die an der Innenseite der Rotorblattwurzel 120 angebrachte Entladevorrichtung 110 elektrisch durch das Masseband 130 und durch den Bolzen 140 an die Kontaktplatte 150 angebunden. Hierbei kann ein Blitzstrom von der Kontaktplatte 150 direkt an die Entladevorrichtung 110 fließen. Das direkte abführen eines Blitzstromes mittels der angebundenen Entladevorrichtung 110 vermeidet somit einen Stromfluss durch die Rotorblattwurzel 120 und die Rotorblattbolzen 160. Des Weiteren wird mittels der durchgehenden elektrischen Verbindung ein elektrostatisches Potential kontinuierlich abgebaut, was ein elektrostatisches Aufladen verhindert. Das im Ausführungsbeispiel angeführte Blitzschutzsystem kann einzeln, oder als Teilvorrichtung eines übergreifenden Systems in einer WEA verwendet werden.

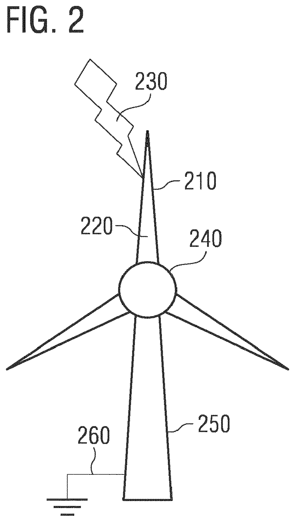

Die Fig. 2 zeigt eine schematische Darstellung eines Blitzschutzsystems für eine WEA. Die Darstellung zeigt ein Rotorblatt 210, ein Kupfergewebe 220, einen Blitzeinschlagspunkt 230, eine Rotornabe 240, einem Turm 250 und eine Erdungseinrichtung 260 zum Ableiten eines elektrischen Stroms. Wenn das exponierte Rotorblatt 210 einer WEA durch einen Blitz getroffen wird, baut sich aufgrund des hohen elektrischen Ladungsüberschusses eine elektrische Spannung zwischen dem Blitzeinschlagspunkt 230 und der Erdungseinrichtung 260 auf. Die elektrische Spannung wird unter Verwendung des Blitzschutzsystems durch einen elektrischen Strom vom Blitzeinschlagspunkt 230 durch das Kupfergewebe 220, die Rotornabe 240, den Turm 250 in die Erdungseinrichtung 260 abgebaut. Bei dem auf der Saug- und Druckseite eines Rotorblatts 210 befindlichen Kupfergewebe 220 handelt es sich um ein Kupferdrahtgeflecht in Form einer elektrisch leitenden Struktur oder eines feinmaschigen Gitters, welches als elektrischer Kontakt zwischen dem Blitzeinschlagspunkt 230 und der Wurzel des Rotorblatts 210 fungiert. Somit dient das Kupfergewebe 220 gleichermaßen als elektrische Leiterbahn und als Flächenrezeptor entlang des Rotorblattes 210 für den Blitzeinschlag. An der Wurzel des Rotorblatts 210 wird der Blitzstrom über das Kupfergewebe 220 mittels einer Entladevorrichtung an die Rotornabe 240 weitergeleitet.

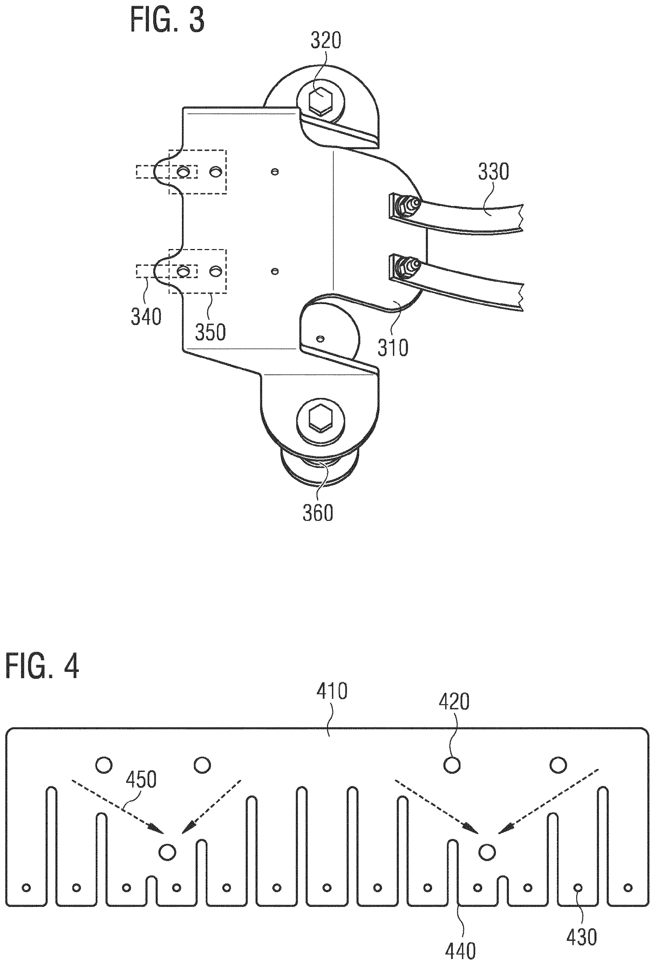

Die Fig. 3 zeigt eine schematische Darstellung eines Ausführungsbeispiels einer Entladevorrichtung bestehend aus einem Halter 310, einer Verschraubung 320, einem Masseband 330, einem Überspannungsableiter 340, einer Kohlebürste 350, und einer elektrischen Isolierung 360. Die an der Innenseite und an der Wurzel der Hohlstruktur eines Rotorblatts 210 in einer WEA angebrachte elektrisch leitende Entladevorrichtung ist mittels einer Verschraubung 320 fest mit dem Rotorblatt 210 verbunden. Die vor Wettereinflüssen geschützte Anordnung der Entladevorrichtung an der Innenseite des Rotorblatts 210 führt sowohl zu einem störungsfreien Betrieb des Blitzschutzsystems, als auch zur einer einfachen Montage aus der Rotornabe 240 heraus. Ferner, kann die Entladevorrichtung schon bei der Herstellung eines Rotorblatts 210 oder bei der Errichtung eine WEA angebracht werden. Des Weiteren kann aufgrund der Verschraubung 320 eine defekte Entladevorrichtung problemlos ersetzt werden.

In dem Vorliegenden Ausführungsbeispiel leitet die Entladevorrichtung einen elektrischen Strom in Folge eines Blitzeinschlages aus dem Rotorblatt 210 in die Rotornabe 240. Die durch ein Masseband 330 mit dem Rotorblatt 210 elektrisch verbundene Entladevorrichtung leitet aufgrund der elektrischen Isolierung 360 den elektrischen Strom über den elektrisch leitenden Halter 310 ausschließlich, oder zumindest überwiegend, an die angebrachte Kohlebürste 350 und nicht in das Rotorlager. Ferner, leitet die Kohlebürste 350 den elektrischen Strom an eine Schleifringkonstruktion (nicht gezeigt) in der Rotornabe 240. Die mit dem Schleifring verbundene Kohlebürste 350 ermöglicht während einer Änderung des Steigungswinkels des Rotorblatts 210 einen geschlossenen Stromkreis zur Rotornabe 240. Die Kohlebürsten 350 sind ein spezielles Beispiel für einen Schleifkontakt, der ausgebildet ist, um einen elektrischen Strom an einen Schleifring zu übertragen. Weitere Ausführungsbeispiele der Erfindung können anders gestaltete Schleifkontakte aufweisen.

In Folge eines Blitzeinschlages in das Rotorblatt 210 leitet die Kohlebürste 350 der Entladeeinrichtung den Strom an die Rotornabe 240 ab. Im Falle einer Überspannung, oder eines Defekts der Kohlebürste 350, wird der Strom mittels eines, oder mehrere paralleler, Überspannungsableiter 340, welche die Form eines sich in Richtung des Abnehmers erstreckenden Vorsprungs in dem Halter 310 haben, an die Rotornabe 240 übertragen. Hierbei wird der für die Kohlebürste 350 zu hohe Strom durch eine Bogenentladung zwischen dem Überspannungsableiter 340 und einem Abnehmer (nicht gezeigt) in die Rotornabe 240 geleitet. Mittels der Überspannungsableiter 340 entsteht somit sowohl eine Redundanz zu den verwendeten Kohlebürsten 350, als auch eine nicht durch die Blitzstromstromstärke eingeschränkte Funktion der Entladeeinrichtung.

Der Überspannungsableiter 340 der Entladevorrichtung 310 kann ferner in Richtung einer ebenen Fläche in der Rotornabe ausgerichtet sein. Die als Abnehmer im Falle einer Überspannung fungierende ebene Fläche ermöglicht eine Bogenentladung zwischen dem Überspannungsableiter 340 und der ebenen Fläche, wodurch der Strom in die Rotornabe abgeleitet wird.

Aufgrund einer elektrischen Isolierung 360 ist die Verschraubung 320 der Entladevorrichtung elektrisch von dem Rotorblatt 210 getrennt. Folglich leiten die Rotorblattbolzen 160 eines Rotorblatts 210 zur Rotornabe 240 keinen Blitzstrom über die verbauten Lager ab. Die mechanische Struktur zur Änderung des Steigungswinkels zwischen dem Rotorblatt 210 und der Rotornabe 240 wird dadurch nur entsprechend der vorgesehen mechanischen Lasten beansprucht und nicht durch Ströme in Folge eines Blitzeinschlages. Ein durch die Entladeeinrichtung abgeführte Blitzstrom wird durch gesonderte Leitungspfade an den Turm 250 und die Erdungseinrichtung 260 geleitet.

Die Fig. 4 zeigt eine schematische Darstellung einer Kontaktplatte 410, angebracht an der Oberfläche einer Rotorblattwurzel 120. Die aus Kupfer bestehende Kontaktplatte 410 umfasst eine Bohrung 420, eine Fügemarkierung 430, und eine in Richtung 450 der Bohrung keilförmig abnehmende kammförmige Kerbung 440. Die kammförmige Kerbung 440 dient der Erhöhung der Flexibilität der Kontaktplatten, um sowohl die Montage zu vereinfachen, als auch Verformungen des Rotorblattes 210 im Betrieb aufzunehmen. Ferner dient die kammförmige Kerbung 440 der Kontaktplatten 410 im Blattwurzelbereich dem stärkeren Verbund der Kontaktplatte 410 mit sowohl der sich entlang des Rotorblattes erstreckenden elektrisch leitenden Struktur 220 als auch mit der Geometrie der Rotorblattwurzel 120. Aufgrund einer erhöhten Flexibilität durch die Kerbung 440 wird eine mit der Rotorblattgeometrie formschlüssige Verbindung angestrebt.

Die keilförmig in Richtung 450 der Bohrungen abnehmende Kerbung 440 dient einer gleichmäßigen Verteilung der Stromdichte in Folge eines Blitzeinschlages zum Ableiten durch die Kontaktplatten hin zu den Kontaktbohrungen 420.

Jeweils zwei auf der Saug- und auf der Druckseite an der Wurzel eines Rotorblatts 210 angebrachte und entlang der Fügemarkierung 430 verpresste (englisch: clinchen), durchsetzgefüge, verschraubte oder kaltverschweißte Kontaktplatten 410 schließen das Kupfergewebe 120 ein. Die zwei Kontaktplatten werden jeweils mittels der Bohrung 320 mit den Bolzen 140 auf der Innenseite der Rotorblattwurzel 120 verschraubt. Auf die Bolzen wird ferner ein Masseband 130 zum elektrischen Anschluss an die Entladevorrichtung befestigt. Das Masseband 130 ist isoliert ausgeführt und wird am Rotorblattinneren mittels eines Laminats befestigt. Hierbei folgt die Anordnung des Massebandes 130 der elektrisch isolierten Ausführung der Entladevorrichtung.

Die aus Kupfer bestehende Kontaktplatte 410 ist ein spezielles Beispiel für eine Kontaktplatte 150, die ausgebildet ist, einen elektrischen Strom zu leiten. Weitere Ausführungsbeispiele der Erfindung können andere elektrische Leitende Materialien enthalten. Auch sind andere Perforierungen und Konturierungen möglich. Insbesondere kann das Profil und/oder die Kerbungen der Kontaktplatten entsprechend des Anwendungsbeispiels auf das Objekt zugeschnitten werden. Hierbei kann einerseits unter Verwendung unterschiedlicher Kupfergewebe 220 der elektrische Kontakt kaltverschweißend ausgeführt werden, und andererseits unter Verwendung unterschiedlicher Kontaktplattengeometrien der Rotorblattgeometrie oder der Stromflussrichtung 450 angepasst werden.

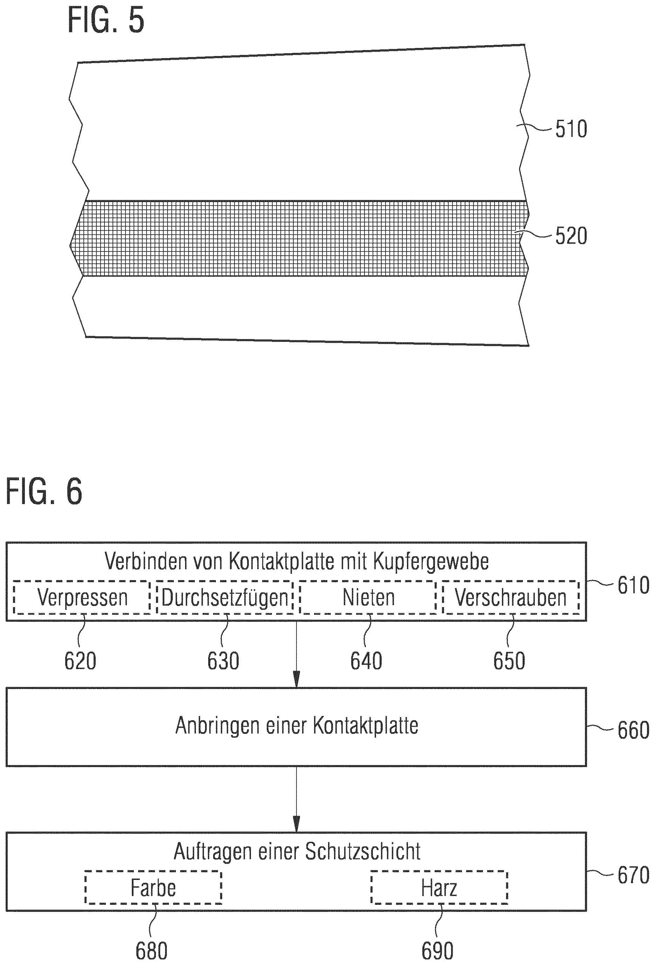

Die Fig. 5 zeigt eine schematische Darstellung eines Ausschnittes eines Rotorblattes 510 und eines Kupfergewebes 520. Das Kupfergewebe 520 ist ein Kupferdrahtgeflecht in Form einer flexiblen, elektrisch leitenden Struktur oder in Form eines feinmaschigen Gitters, welches entsprechend den Anforderungen der Blitzschutzklasse 1 nach DIN EN 61400-24:2011 als Blitzstromableiter spezifiziert ist. Das an der Saug- und Druckseite des Rotorblattes 510 befindliche Kupfergewebe 520 ist flächig verlegt und deckt das elektrisch leitende Kohlefaserlaminat, das in einem Rotorblatt 210 überwiegend die dynamische Last aufnimmt, gänzlich ab. Das Kupfergewebe 520 ist über die Blattlänge durchlaufend, mit oder ohne Trennstöße, ausgelegt. Im Falle von etwaigen Trennstößen, kann durch weitere Lagen eines Kupfergewebes 520 nachträglich eine elektrische Leitfähigkeit sichergestellt werden. Ferner, ist das Kupfergewebe 520 mit den Glasfaserlagen und dem Kohlefaserlaminat (englisch: carbon fiber roving) in einem Rotorblatt 210 vernäht (nicht gezeigt), wodurch das Kupfergewebe 520 elektrisch leitfähig mit der Innenseite des Rotorblatts 110, speziell des Kohlefaserlaminates verbunden ist.

Aufgrund der laminierten Ausführung des Kupfergewebes 520 über das gesamte Rotorblatt 210 können Beschädigungen durch die Verwendung von Flicken aus dem Kupfergewebe 520 instandgesetzt werden.

Das elektrisch leitende Kupfergewebe 520 kann ferner durch ein elektrisch leitendes Aluminiumgewebe ersetzt werden, wodurch die elektrische Leitfähigkeit und die Verwendung unterschiedlicher Materialien in dem hier beschriebenen Ausführungsbeispiel möglich ist.

Es ist ferner möglich das Kupfergewebe 520 in Rotorblättern 210 ohne ein elektrisch leitendes Kohlefaserlaminat zu verwenden.

Fig. 6 zeigt ein Fließdiagramm eines Verfahrens zum Verbinden 610 einer Kontaktplatte eines Blitzschutzsystems mit einem elektrisch leitenden Kupfergewebe 520, gefolgt von dem Anbringen 660 der Kontaktplatte an dem Rotorblatt und dem Auftragen einer Schutzschicht 670.

Wurzelseitig ist das Kupfergewebe 520 mit den Kontaktplatten 150 verbunden 620, wodurch eine elektrisch leitfähige Verbindung zur Entladevorrichtung 110 hergestellt wird. Im Bereich der Rotorblattspitze ist das Kupfergewebe 520 mit einem Endkantenrezeptor verbunden, wodurch das Blitzschutzsystem über die gesamte Länge des Rotorblattes 210 elektrisch leitfähig ist.

Das Verbinden 610 einer Kontaktplatte 410 mit dem Kupfergewebe 520 kann mittels kaltverschweißten, oder unter Verwendung von verschraubten und/oder vernieteten Verbindungsformen, zwischen einzelnen und/oder mehreren Kontaktplatten stattfinden. Insbesondere können Kontaktplatten verpresst 620, durchsetzgefügt 630, genietet 640 oder verschraubt 650 ausgeführt werden. Hierbei wird ein dauerfester elektrischer Kontakt zwischen dem Kupfergewebe und den Kontaktplatten hergestellt, wodurch eine Verbindung unterhalb der Rekristallisation der verwendeten elektrisch leitenden Materialen sichergestellt wird. Ferner wird durch die Ausführungsformen ein flexibler Einsatz von materialen gefördert, wodurch das Kupfergewebe ebenfalls durch ein Aluminiumgewebe ersetzt werden kann.

Das Anbringen 660 eines mit den Kontaktplatten 410 verbundenen Kupfergewebes 520 an das Rotorblatt 220 kann mittels Bolzen 140 an der Rotorblattwurzel 120 ausgeführt werden. Aufgrund des elektrischen Kontakts zwischen dem Kupfergewebe 520 und der Entladevorrichtung 110, kann die Kontaktplatte 410 einen Strom aus dem Rotorblatt 210 an die Entladevorrichtung 110 abführen.

Der an der Rotorblattwurzel 120 angebrachte Verbund des Kupfergewebes 520 und Kontaktplatte 410 wird zum Schutz vor Witterungseinflüssen mit einer schützenden organischen Schicht entlang des Rotorblattes laminiert 670. Ferner dient das oberflächige Auftragen 670 der Schutzschicht auf das Kupfergewebe 520 und die Kontaktplatte 410 dem anpassen des Blitzschutzsystems an die WEA Geometrie.

Die schützende Schicht kann sowohl aus Farbe 680 bestehen, oder mittels eines harzförmigen Materials 690 in das Profil des Rotorblattes eingearbeitet sein, wodurch das Kupfergewebe 520 und die Kontaktplatte 410 von externen Einflüssen getrennt ist und lebensdauerfest ausgeführt ist.

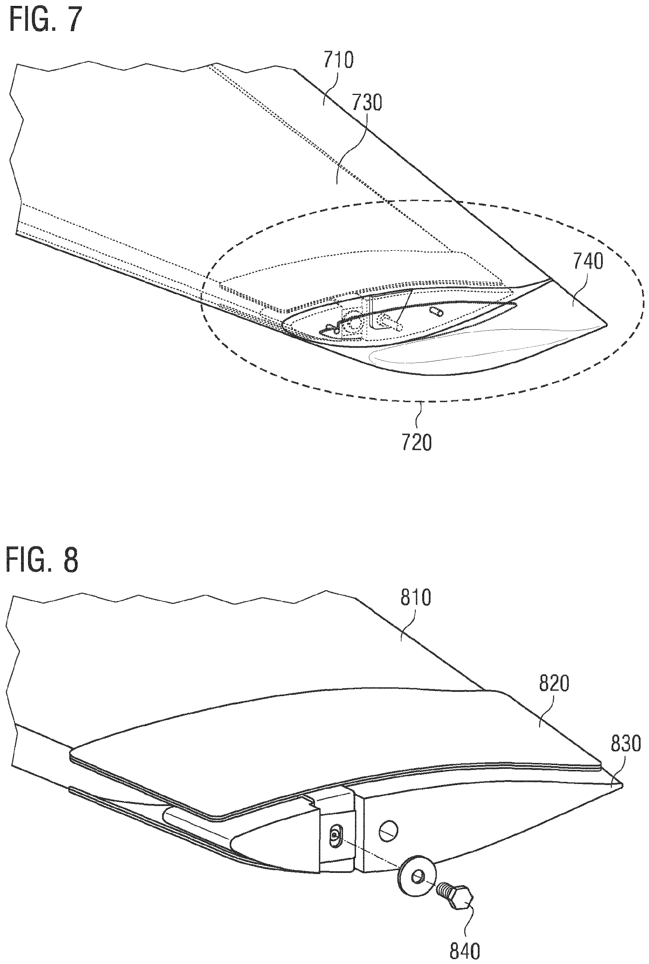

Fig. 7 zeigt eine schematische Darstellung eines Endkantenrezeptors 720 für ein Rotorblatt 710 bestehend aus einem Rotorblatt 710 und einem Kupfergewebe 730. Ferner, besteht der Endkantenrezeptor 720 aus einer Rotorblattspitze 740, einer Kontaktplatte 820, einer Kontaktplattenverschraubung 840, eine Rechts-Links-Schraube und aus Laschen. Der Endkantenrezeptor 720 baut auf einer bestehenden herkömmlichen Rotorblattspitze 740 aus Aluminium auf, und ermöglicht mittels einer Adapterrippe 830 eine formschlüssige Verbindung zum Rotorblatt 710.

Die Fig. 8 zeigt eine Adapterrippe 830. Die Adapterrippe 830 ist zwischen dem Rotorblatt 710 und der Rotorblattspitze 740 positioniert, und mittels einer Verschraubung mit dem Rotorblatt 710 verbunden.

Ferner umfasst der Endkantenrezeptor 720 an der Oberfläche der Saug- und Druckseite des Rotorblatts 710 jeweils zwei Kontaktplatten 820. Die Kontaktplatten 820 sind entsprechend der geometrischen Form des Rotorblatts 710 ausgeführt und fügen sich somit nahtlos in die WEA ein. Des Weiteren wird das Kupfergewebe 730 am Rotorblatt 710, ähnlich wie mit den Kontaktplatten 150 an der Wurzel des Rotorblattes 210, ebenfalls mit den zwei Kontaktplatten 820 verpresst, wodurch ein durchgehender elektrischer Kontakt zwischen Kontaktplatten 820 des Endkantenrezeptors 740 und dem Kupfergewebe 730 entsteht.

Der elektrische Kontakt setzt sich mittels einer Lasche an den Kontaktplatten 820 durch die Kontaktplattenverschraubung 840 über die Adapterrippe 830 bis hin zur Rotorblattspitze 740 fort. Somit steht der Endkantenrezeptor 720 aufgrund der durchgehenden elektrischen Leitfähigkeit ebenfalls als Blitzeinschlagspunkt 230 des Blitzschutzsystems zur Verfügung. Das Kupfergewebe 810 befindet sich hierbei jeweils zwischen den beiden Platten. In weiteren möglichen Ausführungsformen verwendet der Endkantenrezeptor 720 eine von außen angebrachte Rechts-Links-Schraube zur Verbindung von Adapterrippe 830 mit der Rotorblattspitze 740, welche über eine Aussparung in der Rotorblattspitze 740 zugänglich ist. Im Fertigungsprozess wird diese Aussparung verfüllt, sodass eine ununterbrochene Oberfläche auf dem Rotorblatt und an der Blattspitze entsteht.

Ein System zum Ableiten eines elektrischen Stroms aus einer Rotorblattspitze 720 gemäß den Ausführungsbeispielen der Erfindung umfasst also zumindest eine Rotorblattspitze 720 aus einem elektrisch leitenden Material, eine Kontaktplatte 810 zur Anbindung eines sich entlang eines Rotorblattes 210 erstreckenden elektrisch leitenden Struktur 220 und eine Adapterrippe 830 aus elektrisch leitendem Material, die zwischen der Rotorblattspitze 620 und der Kontaktplatte 710 angeordnet und mit beiden elektrisch leitend verbunden ist.

In weiteren möglichen Ausführungsformen des Endkantenrezeptors 720 besteht die Adapterrippe 830, die Rotorblattspitze 740 und die Kontaktplatte 820 zum Ableiten eines Stroms aufgrund der exponierten Lage aus unterschiedlichen elektrisch leitenden Materialien. Insbesondere zur Vorbeugung von Kontaktkorrosion wird hierbei die Verbindung zweier unterschiedlich inerter und/oder korrosionsbeständiger Werkstoffe bevorzugt, wodurch ein Abtrag des weniger korrosionsbeständigen Materials reduziert wird. Mögliche Ausführungsformen des Endkantenrezeptors 720 verwenden eine Adapterrippe 830 aus Edelstahl, eine Kontaktplatte 820 aus Kupfer und eine Rotorblattspitze 740 aus Aluminium, um die elektrische Leitfähigkeit des Endkantenrezeptors 720 zu gewährleisten. Ferner, können auch andere metallische oder elektrische leitende Materialien zur Vorbeugung von Korrosion und/oder zum Ableiten eines elektrischen Stroms aus einer WEA verwendet werden.

Ferner, kann konstruktionsbedingt die Adapterrippe 830, die Rotorblattspitze 740 und die Kontaktplatte 820 zum Ableiten eines Stroms aufgrund der exponierten Lage aus identischen elektrisch leitenden Materialien bestehen. Unter Verwendung von identischen materialen können alternative Verbindungsverfahren (wie zum Beispiel schweißen, Löten) der Bauteile des Blitzschutzsystems verwendet werden.

In weiteren Ausführungsbeispiele kann die Adapterrippe 830 aus Edelstahl bestehen, um eine besonders hohe Korrosionsbeständigkeit des Endkantenrezeptors 620 zu erzielen.

Ferner, kann die Adapterrippe 830 aus Aluminium bestehen, um eine kostengünstige Fertigung des Endkantenrezeptors 620 zu gewährleisten.

Entsprechend weiterer Ausführungsbeispiele kann die Adapterrippe 830 aus Stahl gefertigt werden, um alternative Materialkombination des Endkantenrezeptors 620 zur Vorbeugung von Kontaktkorrosion zu ermöglichen.

Das in einer WEA verbaute Blitzschutzsystem ist weiterhin so ausgeführt, dass ein Impulsspannungstest unter Verwendung einer elektrischen Vergleichsanordnung den Nachweis der Blitzstromleitfähigkeit gewährleistet. Hierbei wird die Impedanz des Blitzschutzsystems mittels eines Prüfstroms auf etwaige kapazitive oder resistive Veränderungen und Unregelmäßigkeiten geprüft, und etwaige Defekte lokalisiert.

Ein Beispiel betrifft eine Kontaktplatte (410) zum Ableiten eines elektrischen Stroms eines Blitzschutzgewebes eines Rotorblatts (210) einer Windenergieanlage an eine Entladevorrichtung (110). Die Kontaktplatte umfasst kammförmige Einschnitte in der Kontaktplatte und zumindest einen Anschluss, der mit der Entladevorrichtung (110) zum Ableiten des elektrischen Stroms verbindbar ist.

Ein Beispiel betrifft ein System, wobei das Kupfergewebe (520) sich als eine elektrisch leitende Struktur entlang einer Saug- und/oder Druckseite des Rotorblattes (210) erstreckt. Ein Beispiel betrifft ein System, wobei ein Aluminiumgewebe das Kupfergewebe (220) ersetzt, welches mit der Kontaktplatte (410) elektrische verbunden ist. Ein Beispiel betrifft ein System zum Ableiten eines elektrischen Stroms aus einer Rotorblattspitze in einer Windenergieanlage, das eine Rotorblattspitze (740) aus einem elektrisch leitenden Material, eine Kontaktplatte (820) zur Anbindung einer sich entlang eines Rotorblattes erstreckenden elektrisch leitenden Struktur (730) und eine Adapterrippe (830) aus elektrisch leitendem Material, die zwischen der Rotorblattspitze (740) und der Kontaktplatte (820) angeordnet und mit beiden elektrisch leitend verbunden ist, umfasst. Beispielsweise bestehen die Adapterrippe (830) und die Kontaktplatte (820) aus identischen, elektrisch leitenden Materialien. Beispielsweise besteht die Adapterrippe (830) aus inertem, elektrisch leitendem Material besteht. Beispielsweise besteht die Adapterrippe (830) aus Edelstahl, Aluminium, Kupfer, oder Stahl. Das System nach Anspruch 12 bis 16, wobei die Adapterrippe (830) aus Edelstahl, die Rotorblattspitze (640) aus Aluminium und die Kontaktplatte (820) aus Kupfer bestehen. Beispielsweise sind die Adapterrippe (830) und die Rotorblattspitze (740) mittels einer Rechts-Links-Schraube verbunden.

Ein Beispiel betrifft ein Verfahren zum Anbringen eines Kupfergewebes (520) zum Ableiten eines elektrischen Stroms an einem Rotorblatt (210) einer Windenergieanlage. Das Verfahren umfasst kaltverschweißendes Verbinden (610) einer Kontaktplatte (410) mit einem Kupfergewebe (520). Beispielsweise sind die Kontaktplatten (410) mit dem Kupfergewebe (520) mittels Verpressen (620) verbunden. Beispielsweise sind die Kontaktplatten (410) mit dem Kupfergewebe (520) mittels Nieten (640) verbunden. Beispielsweise sind die Kontaktplatten (410) mit dem Kupfergewebe (520) mittels Verschrauben (650) verbunden.

Das Verfahren kann z.B. ferner ein Anbringen (660) der Kontaktplatte (410) an das Rotorblatt (210) und ein Auftragen (670) einer Schutzschicht umfassen. Beispielsweise umfasst das Verfahren ferner ein Auftragen einer Schutzschicht (670) aus Farbe (680).

## Patentansprüche

1. Ein System zum Ableiten eines elektrischen Stroms in einem Rotorblatt (210) einer Windenergieanlage umfassend:
eine Entladevorrichtung (110), die an der Wurzel des Rotorblattes (210) angebracht ist, wobei die Entladevorrichtung (110) ausgebildet ist, um einen Strom an einen mit einer Rotornabe (240) verbundenen Abnehmer zu übertragen,
wobei ein Kupfergewebe (220) des Systems mit einer Kontaktplatte (410) elektrisch mittels Kaltverschweißen verbunden ist, wobei die Entladevorrichtung (110) elektrisch an die Kontaktplatte angebunden ist.

2. Das System nach Anspruch 1, wobei die Entladevorrichtung (110) an der Innenseite des Rotorblattes (210) angebracht ist.

3. Das System nach Anspruch 1, wobei die Entladevorrichtung (110) einen Schleifkontakt (350) aufweist, der ausgebildet ist, um einen elektrischen Strom an einen Schleifring zu übertragen.

4. Das System nach einem der vorhergehenden Ansprüche, wobei die Entladevorrichtung (110) zumindest einen sich in Richtung des Abnehmers erstreckenden Vorsprung (340) aufweist, der ausgebildet ist, um bei einem Blitzeinschlag oder einer statischen Aufladung eine Bogenentladung zu erzeugen.

5. Das System nach Anspruch 4, wobei zumindest der erstreckende Vorsprung (340) der Entladevorrichtung (110) in Richtung einer ebenen Fläche in der Rotornabe (240) ausgerichtet ist, die ausgebildet ist, um bei einem Blitzeinschlag oder einer statischen Aufladung eine Bogenentladung zu erzeugen.

6. Das System nach einem der vorhergehenden Ansprüche, ferner umfassend: Isolatoren (360), welche die Entladevorrichtung (110) von der Wurzel des Rotorblatts (210) elektrisch trennen.

7. Das System nach einem der vorhergehenden Ansprüche, ferner umfassend: Isolatoren (360), welche die Entladevorrichtung (110) von einem zur Verbindung des Rotorblatts (210) mit der Rotornabe (240) verwendeten Rotorblattbolzen (160) elektrisch trennen.

8. Eine Kontaktplatte (410) zum Ableiten eines elektrischen Stroms eines Blitzschutzgewebes eines Rotorblatts (210) einer Windenergieanlage an eine Entladevorrichtung (110), umfassend:
kammförmige Einschnitte in der Kontaktplatte; und
zumindest einen Anschluss, der mit der Entladevorrichtung (110) zum Ableiten des elektrischen Stroms verbindbar ist.

9. Die Kontaktplatte nach Anspruch 8, wobei die Kontaktplatte (410) kammförmige Einschnitte mit im Hinblick auf zumindest eine Position abnehmender Tiefe (440) aufweist.

10. Ein System zum Ableiten eines elektrischen Stroms aus einer Rotorblattspitze in einer Windenergieanlage umfassend:
eine Rotorblattspitze (740) aus einem elektrisch leitenden Material;
eine Kontaktplatte (820) zur Anbindung einer sich entlang eines Rotorblattes erstreckenden elektrisch leitenden Struktur (730); und
eine Adapterrippe (830) aus elektrisch leitendem Material, die zwischen der Rotorblattspitze (740) und der Kontaktplatte (820) angeordnet und mit beiden elektrisch leitend verbunden ist.

11. Das System nach Anspruch 10, wobei die Adapterrippe (830) und die Rotorblattspitze (740) aus unterschiedlichen, elektrisch leitenden Materialien bestehen.

12. Ein Verfahren zum Anbringen eines Kupfergewebes (520) zum Ableiten eines elektrischen Stroms an einem Rotorblatt (210) einer Windenergieanlage umfassend: kaltverschweißendes Verbinden (610) einer Kontaktplatte (410) mit einem Kupfergewebe (520).

13. Das Verfahren nach Anspruch 12, wobei die Kontaktplatten (410) mit dem Kupfergewebe (520) mittels Durchsetzfügen (630) verbunden sind.

14. Das Verfahren nach Anspruch 12, ferner umfassend:
Anbringen (660) der Kontaktplatte (410) an das Rotorblatt (210); und
Auftragen (670) einer Schutzschicht.

15. Das Verfahren nach Anspruch 12, ferner umfassend:
Auftragen einer Schutzschicht (670) aus Harz (690).
